(19) Europäisches Patentamt
European Patent Office
Office européen des brevets

(11) EP 1 564 272 A2

(12) # EUROPEAN PATENT APPLICATION

(43) Date of publication:
17.08.2005 Bulletin 2005/33

(51) Int Cl.^7: C09J 7/02

(21) Application number: 05002829.9

(22) Date of filing: 10.02.2005

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(30) Priority: 10.02.2004 JP 2004033577
28.10.2004 JP 2004314037

(71) Applicant: NITTO DENKO CORPORATION
Osaka (JP)

(72) Inventor: Yoneda, Masanobu
Ibaraki-shi, Osaka (JP)

(74) Representative: Grünecker, Kinkeldey,
Stockmair & Schwanhäusser Anwaltssozietät
Maximilianstrasse 58
80538 München (DE)

(54) **Pressure-sensitive adhesive sheets for removal of solvent-containing substance**

(57) The pressure-sensitive adhesive sheet for removal of a solvent-containing substance contains a substrate and a pressure-sensitive adhesive layer which is formed on at least one side of the substrate, wherein the pressure-sensitive adhesive layer is formed by a pressure-sensitive adhesive composition containing (A) an acrylic polymer containing carboxyl group, (B) an amine compound containing plural hydroxyl groups and (C) a polyisocyanate compound. In the pressure-sensitive adhesive composition containing the above-mentioned pressure-sensitive adhesive layer, it is preferred that rate of the amine compound (B) having plural hydroxyl groups and that of the polyisocyanate compound (C) to 100 parts by weight of the acrylic polymer containing carboxyl group (A) are 0.1 to 50 part(s) by weight and 5 to 50 parts by weight, respectively.

EP 1 564 272 A2

## Description

### FIELD OF THE INVENTION

The present invention relates to a pressure-sensitive adhesive sheet for removal of a solvent-containing substance such as pastes (inks) turned about backs of screen printing plate for screen printing, inks deposited on rollers of printing machines for offset printing, gravure printing or flexographic printing, inks deposited near the jet orifice of ink jet printers, etc. as well as inks for ink-jet printers and paints.

### BACKGROUND OF THE INVENTION

Solvent-containing substances such as pastes and inks and other semisolid substances containing solvents and being in wet conditions are widely used in the fields of printing, paints and adhesives. However, when those solvent-containing substances are excessively present in a specific region or are present in an undesired region, various problems are apt to happen such as that they stain machines, instruments and hands or they deteriorate quality of the product. For example, when a certain number of printing operations is perfumed in screen printing, a paste (an ink) turns about the back of a screen printing plate or blur is resulted on a printed image whereby precise and beautiful printing are not able to be achieved.

In order to prevent blur, etc. in the screen printing as such, there has been known a method where the paste turning about the back of a plate is removed using a pressure-sensitive adhesive sheet. For example, there has been proposed a pressure-sensitive adhesive sheet for cleaning of a screen printing plate having a high cleaning effect by which the paste turning about the back of a screen printing plate is surely adhered and removed without detaching an emulsifier or the like of the screen printing plate (refer to Japanese Patent Laid-Open No. 2000-177110). In such a pressure-sensitive adhesive sheet for cleaning of a screen printing plate, characteristic values for adhesive force, solvent-absorbing amount and adhesive force after absorption of solvent are stipulated.

However, with regard to a pressure-sensitive adhesive sheet for removal of a solvent-containing substance such as a pressure-sensitive adhesive sheet for cleaning of a screen printing plate, there has been a demand for a pressure-sensitive adhesive sheet having better cleaning property and having more enhanced absorbing amount for solvent.

Further, with regard to a pressure-sensitive adhesive sheet for cleaning of a screen printing plate, there has been a demand for a pressure-sensitive adhesive sheet where productivity is more enhanced and is able to achieve a sufficient cohesive force even by aging for short time.

### SUMMARY OF THE INVENTION

Accordingly, an object of the present invention is to provide a pressure-sensitive adhesive sheet for removal of a solvent-containing substance in which cleaning property and solvent-absorbing amount are much more enhanced.

Another object of the present invention is to provide a pressure-sensitive adhesive sheet for removal of a solvent-containing substance where a sufficient cohesive force is able to be achieved even by an aging for short time and also excellent cleaning property and solvent-absorbing amount are able to be achieved.

Still another object of the present invention is to provide a pressure-sensitive adhesive sheet for cleaning of a screen printing plate where a paste turns around the back of the screen printing plate is surely adhered and removed and an excellent screening effect is able to be achieved.

In order to achieve the above-mentioned objects, the present inventor has conducted intensive investigations and found that, when a pressure-sensitive adhesive layer in a pressure-sensitive adhesive sheet for removal of a solvent-containing substance is formed by a pressure-sensitive adhesive composition having a specific composition, a high cleaning property is able to be achieved even by having a weak adhesive force, time for aging necessary for achieving a cohesive force which greatly affects the productivity is able to be greatly shortened and cleaning property and solvent-absorbing amounts are able to be improved. The present invention has been accomplished on the basis of such findings.

Thus, the present invention provides a pressure-sensitive adhesive sheet for removal of a solvent-containing substance comprising a substrate having formed a pressure-sensitive adhesive layer on at least one side of the substrate, wherein the pressure-sensitive adhesive layer is formed by a pressure-sensitive adhesive composition containing (A) an acrylic polymer containing carboxyl group, (B) an amine compound containing plural hydroxyl groups and (C) a polyisocyanate compound.

In the pressure-sensitive adhesive composition for forming the above-mentioned pressure-sensitive adhesive layer, it is preferred that rate of the amine compound (B) having plural hydroxyl groups and that of the polyisocyanate compound (C) to 100 parts by weight of the acrylic polymer containing carboxyl group (A) are 0.1 to 50 part(s) by weight

and 5 to 50 parts by weight, respectively.

The above-mentioned pressure-sensitive adhesive sheet may, for example, be used as a pressure-sensitive adhesive sheet for cleaning of a screen printing plate.

## DETAILED DESCRIPTION OF THE INVENTION

[Substrate]

In the pressure-sensitive adhesive sheet for removal of a solvent-containing substance in the present invention, although there is no particular limitation for the substrate, a plastic film including polyolefin film such as polyethylene film and polypropylene film and polyester film such as polyethylene terephthalate film is able to be advantageously used in case where contamination of dust and foreign substances is to be prevented because there is no problem of generation of paper powder thereby. When the sheet is used only for cleaning of roll for example, paper may be also used as a substrate. In the use for removal of paste and ink on an uneven surface, it is also advantageous to use a foamed substance prepared from polyurethane, polyethylene, EPDM (ethylene-propylene-diene rubber), etc. as a substrate. Further, in some uses, it is also possible to use nonwoven fabric, cloth, metal foil, etc. as a substrate.

There is no particular limitation for the thickness of the substrate but that may be appropriately set by taking strength, working ability, etc. into consideration. Usually, it is about 10 to 500 μm (preferably, 12 to 200 μm and, more preferably, 15 to 100 μm). When the substrate is a foamed substance, thickness of the substrate is usually from several mm to several tens mm.

The substrate may be any of forms of a single layer and plural layers. If necessary, the substrate may be subjected to various treatments such as back side treatment, antistatic treatment and undercoating treatment.

[Pressure-sensitive adhesive layer]

In the pressure-sensitive adhesive sheet for removal of a solvent-containing substance of the present invention, the pressure-sensitive adhesive layer is formed from a pressure-sensitive adhesive composition containing (A) an acrylic polymer containing carboxyl group, (B) an amine compound containing plural hydroxyl groups (that may sometimes by called "polyhydroxyamine type compound (B)") and (C) a polyisocyanate compound. In the present invention, the carboxyl group-containing acrylic polymer (A) is able to be used as a base polymer (a basic component for the pressure-sensitive adhesive). Further, the polyhydroxyamine type compound (B) is able to be used as an auxiliary hardener (cross-linking aid). Still further, the polyisocyanate compound (C) is able to be used as a hardener (cross-linking agent). Thus, in the present invention, the carboxyl group-containing acrylic polymer (A) as a base polymer is able to be hardened by means of cross-linking due to heat upon drying, etc. by the use of the polyisocyanate compound (C) as a hardener and the polyhydroxyamine compound (B) as an auxiliary hardener.

((A) Carboxyl group-containing acrylic polymer)

With regard to a carboxyl group-containing acrylic polymer (A), there is no particular limitation so far as it is an acrylic polymer containing at least one carboxylic group in a molecule. With regard to the number of the carboxyl group contained in a molecule in the carboxyl group-containing acrylic polymer (A), there is no particular limitation so far as it is at least one and that may be appropriately selected depending upon adhesive force, cohesive force, cleaning property and solvent-absorbing amount of the pressure-sensitive adhesive sheet for removal of a solvent-containing substance, upon the type of the paste (ink) which is to be removed, etc. The carboxyl group-containing polymer (A) may be used either solely or jointly by combining two or more thereof.

With regard to a carboxyl group-containing polymer (A), it is possible to use, for example, a copolymer in which at least alkyl (meth)acrylate (alkyl acrylate, alkyl methacrylate) and a carboxyl group-containing monomer copolymerizable to the alkyl (meth)acrylate (carboxyl group-containing copolymerizable monomer) are monomer components.

There is no particular limitation for the alkyl (meth)acrylate and that where carbon number(s) of the alkyl group is/are 1 to 20 (preferably 1 to 18 and, more preferably, 2 to 10) is advantageously used. Specific examples of the alkyl (meth)acrylate are methyl (meth)acrylate, ethyl (meth)acrylate, propyl (meth)acrylate, isopropyl (meth)acrylate, butyl (meth)acrylate, isobutyl (meth)acrylate, sec-butyl (meth)acrylate, tert-butyl (meth) acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth) acrylate, tridecyl (meth)acrylate, tetradecyl (meth)acrylate, pentadecyl (meth) acrylate, hexadecyl (meth)acrylate, heptadecyl (meth)acrylate, octadecyl (meth) acrylate, nonadecyl (meth) acrylate and eicosyl (meth)acrylate. Each of the alkyl (meth)acrylates may be used solely or two or more thereof may be used

jointly.

There is no particular limitation for a carboxyl group-containing copolymerizable monomer so far as it is a monomer component which is able to be copolymerized with alkyl (meth)acrylate and has at least one carboxyl group in a molecule and its examples are (meth)acrylic acid (acrylic acid, methacrylic acid), itaconic acid, maleic acid, fumaric acid and crotonic acid. It is also possible to use an acid anhydride of such a carboxyl group-containing copolymerizable monomer (such as a monomer containing an acid anhydride including maleic anhydride, itaconic anhydride, etc.) as a carboxyl group-containing copolymerizable monomer. Each of the carboxyl group-containing copolymerizable monomers may be used solely or two or more thereof may be used jointly. With regard to the carboxyl group-containing copolymerizable monomer, (meth)acrylic acid is preferred and acrylic acid may be used particularly preferably.

In the present invention, a monomer (copolymerizable monomer) which is able to copolymerized with the alkyl (meth)acrylate or the carboxyl group-containing copolymerizable monomer may be used together if necessary. Examples of such a copolymerizable monomer are a cyano group-containing monomer such as (meth)acrylonitrile (acrylonitrile, methacrylonitrile); vinyl ester such as vinyl acetate and vinyl propionate; monomer of a styrene type such as styrene, α-methylstyrene and vinyltoluene; epoxy group-containing monomer such as glycidyl (meth)acrylate; hydroxyl group-containing monomer such as 2-hydroxypropyl (meth)acrylate, 3-hydroxypropyl (meth)acrylate and 4-hydroxypropyl (meth)acrylate; alkoxy group-containing monomer such as methoxyethyl (meth)acrylate and ethoxyethyl (meth) acrylate; monomer of an olefin type such as ethylene, propylene, isoprene and butadiene; monomer of a vinyl ether type such as methyl vinyl ether and ethyl vinyl ether; amide group-containing monomer such as (meth)acrylamide and N-methylol (meth)acrylamide; amino group-containing monomer such as N,N-dimethylaminoethyl (meth)acrylate; halogen atom-containing monomer such as vinyl chloride; cycloalkyl (meth)acrylate such as cyclohexyl (meth)acrylate; and aryl (meth)acrylate such as phenyl (meth)acrylate. With regard to a copolymerizable monomer, it is also possible to use a polyfunctional monomer such as hexanediol di(meth)acrylate, (poly)ethylene glycol di(meth)acrylate, (poly) propylene glycol di(meth)acrylate, neopentyl glycol di(meth)acrylate, pentaerythritol di(meth)acrylate, glycerol di(meth) acrylate, trimethylolpropane tri(meth)acrylate, pentaerythritol tri(meth)acrylate, dipentaerythritol hexa(meth)acrylate, epoxy acrylate, polyester acrylate, urethane acrylate, divinylbenzene, butyl di(meth)acrylate and hexyl di(meth)acrylate. Each of the copolymerizable monomer may be used solely or two or more thereof may be used jointly. With regard to the copolymerizable monomer, preferred ones are cyano group-containing monomer and vinyl esters and acrylonitrile is able to be used particularly preferably.

Rate of each of the alkyl (meth)acrylate, the carboxyl group-containing copolymerizable monomer and the copolymerizable monomer may be appropriately selected depending upon the type of the paste (ink) (type of the solid component and type of the solvent) to be removed and its examples to the total monomer components is about 40 to 98% by weight (preferably 50 to 95% by weight) of the alkyl (meth) acrylate, about 0.5 to 15% by weight (preferably 1 to 10% by weight) of the carboxyl group-containing copolymerizable monomer and about 0 to 50% by weight (preferably 2 to 40% by weight) of the copolymerizable monomer.

The carboxyl group-containing polymer (A) is able to be prepared by a known or common polymerization method. To be more specific, a solution polymerization method conducted by using a polymerization initiator such as azo compound or peroxide, an emulsion polymerization, a bulk polymerization and polymerization method by irradiation of light or radioactive ray using an optical initiator are exemplified as a polymerization method for manufacture of the carboxyl group-containing acrylic polymer (A) and a polymerization method using a polymerization initiator which produces radicals upon decomposition (a radical polymerization method) is preferred. With regard to the above polymerization initiator, there is no particular limitation but it may be appropriately selected from the publicly known or commonly used ones and used and its examples are a polymerization initiator of an azo type such as 2,2'-azobisisobutyronitrile, 2,2'-azobisisovaleronitrile, 2,2'-azobis(4-methoxy-2,4-dimethylvaleronitrile), 2,2'-azobis(2,4-dimehtylvaleronitrile), 2,2'-azobis(2-methylbutylonitrile), 1,1'-azobis(cyclohexane-1-carbonitrile), 2,2'-azobis(2,4,4-trimethylpentane) and dimethyl-2,2'-azobis(2-methylpropionate); and a polymerization initiator of a peroxide type such as benzoyl peroxide, tert-butyl hydroperoxide, di-tert-butyl peroxide, tert-butyl peroxybenzoate, dicumyl peroxide, 1,1-bis(tert-butylperoxy)-3,3,5-trimethylcyclohexane and 1,1-bis(tert-butylperoxy)cyclododecane. In the case of a solution polymerization, it is preferred to use an oil-soluble polymerization initiator. Each of the polymerization initiators may be used solely or two or more thereof may be used jointly. Amount of the polymerization initiator used may be within a usual amount and, for example, it may be selected from the range of 0.01 to 1 part by weight to 100 parts by weight of the total monomer components.

In the polymerization, a chain-transfer agent may be used. In a solution polymerization, various kinds of common solvents may be used. Examples of such solvents are organic solvent including esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketone such as methyl ethyl ketone and methyl isobutyl ketone. The solvent may be used solely or two or more thereof may be used jointly.

((B) Compounds of a polyhydroxyamine type)

There is no particular limitation for the polyhydroxyamine compound (B) so far as it is an amine compound having at least two hydroxyl groups (particularly, alcoholic hydroxyl groups) in a molecule. In the polyhydroxyamine compound (B), there is no particular limitation for the numbers of nitrogen atom contained in a molecule and the numbers may be appropriately selected depending upon type and rate of the polyisocyanate compound (C). When no nitrogen atom is contained in the polyhydroxyamine compound (B), the reactivity is poor and shortening of an aging time is not able to be achieved. The polyhydroxyamine compound (B) may be used either solely or two or more thereof may be used jointly.

To be more specific, in the polyhydroxyamine compound (B), examples of the polyhydroxyamine compound (B) having one nitrogen atom in a molecule are dialcoholamine such as diethanolamine, dipropanolamine, diisopropanolamine, N-methyldiethanolamine, N-methyldiisopropanolamine, N-ethyldiethanolamine, N-ethyldiisopropanolamine, N-butyldiethanolamine and N-butyldiisopropanolamine; and trialcoholamine such as triethanolamine, tripropanolamine and triisopropanolamine.

With regard to the polyhydroxyamine compound (B) having two nitrogen atoms in a molecule, a polyhydroxyamine compound represented by the formula (1) is exemplified.

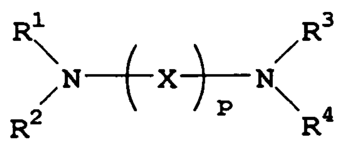

(1)

In the formula (1), $R^1$, $R^2$, $R^3$ and $R^4$ are same or different and each is hydrogen atom or [$-(R^5O)_m(R^6O)_n-H$] in which $R^5$ and $R^6$ are same or different and each is an alkylene group; m and n each is an integer of 0 or more and they are not 0 at the same time; at least two of $R^1$, $R^2$, $R^3$ and $R^4$ are [$-(R^5O)_m(R^6O)_n-H$]; x is a hydrocarbon group having two or more valences; and p is an integer of 1 or more.

In the formula (1), examples of the alkylene group represented by $R^5$ and $R^6$ are alkylene group having about 1 to 6 carbon(s) (preferably alkylene groups having 1 to 4 carbon(s) and, more preferably, alkylene group having 2 or 3 carbons) such as methylene, ethylene, propylene, trimethylene, tetramethylene, ethylethylene, pentamethylene and hexamethylene. The alkylene group may be any form of straight and branched chain. With regard to the alkylene group represented by $R^5$ and $R^6$, ethylene group or propylene group may be advantageously used.

There is no particular limitation for m and n so far as they are integers of 0 or more and, for example, at least one of m and n may be selected from the range of about 0 to 20 (preferably 1 to 10). There are many cases where at least one of m and n is 0 while another is an integer of 1 or more (particularly 1). Incidentally, although m and n are not zero at the same time, if and when m and n are zero at the same time, then $R^1$ to $R^4$ should be hydrogen atoms.

X is a divalent hydrocarbon group. Examples of the divalent hydrocarbon group are alkylene, cycloalkylene and arylene groups. An alkylene group represented by X may be a straight or branched chain. Further, it may be either saturated or unsaturated. Examples of the alkylene represented by X are alkylene having about 1 to 6 carbons (preferably alkylene having 1 to 4 carbon(s) and, particularly preferably, alkylene having 2 or 3 carbons) such as methylene, ethylene, propylene, trimethylene and tetramethylene. Examples of the cycloalkylene group are cycloalkylene of about five- to twelve-membered ring such as 1,2-cyclohexylene, 1,3-cyclohexylene and 1,4-cyclohexylene. With regard to the arylene group, there may be used, for example, 1,2-phenylene group, 1,3-phenylene group, 1,4-phenylene group, etc.

There is no particular limitation for p so far as it is an integer of 1 or more and, for example, it may be selected from the range of integers of 1 to 10 and, preferably, it is an integer of 1 to 6 (more preferably, 1 to 4).

To be more specific, examples of the polyhydroxyamine compound (B) represented by the formula (1) are N,N,N',N'-tetrakis(2-hydroxyethyl)ethylenediamine, N,N,N',N'-tetrakis(2-hydroxypropyl)ethylenediamine, N,N,N',N'-tetrakis(2-hydroxyethyl)trimethylenediamine and N,N,N',N'-tetrakis(2-hydroxypropyl)trimethylenediamine as well as a polyoxyalkylene condensate of alkylenediamine such as a polyoxyethylene condensate of ethylenediamine, a polyoxypropylene condensate of ethylenediamine and a polyoxyethylene-polyoxypropylene condensate of ethylenediamine. With regard to the polyhydroxyamine compound (B) as such, commercially available products such as "EDP-300" (trade name), "EDP-450" (trade name), "EDP-1100" (trade name) and "Pluronic" (trade name) (all of them are manufactured by Asahi Denka Co., Ltd.) may be used.

Incidentally, it is also possible in the present invention to use an amine compound having plural reactive functional groups other than hydroxyl group together with the polyhydroxyamine compound (B).

((C) Polyisocyanate compound)

There is no particular limitation for the polyisocyanate compound (C) so far as it is an isocyanate compound having at least two isocyanate groups in a molecule. There is no particular limitation for the numbers of isocyanate group contained in a molecule of the polyisocyanate compound (C) so far as the numbers are at least two and that may be appropriately selected depending upon type and rate of the carboxyl group-containing acrylic polymer (A), adhesive force, cohesive force, cleaning property and solvent-absorbing amount of the pressure-sensitive adhesive sheet for removal of solvent-containing substance, type of the paste (ink) which is an object to be removed, etc. The polyisocyanate compound (C) includes, for example, an aliphatic polyisocyanate, an alicyclic polyisocyanate, an aromatic polyisocyanate and an aromatic/aliphatic polyisocyanate. The polyisocyanate compound (C) may be used either solely or jointly by combining two or more thereof.

The aliphatic polyisocyanate includes, for example, an aliphatic diisocyanate such as 1,6-hexamethylene diisocyanate, 1,4-tetramethylene diisocyanate, 2-methyl-1,5-pentane diisocyanate, 3-methyl-1,5-pentane diisocyanate and lysine diisocyanate.

The alicyclic polyisocyanate includes, for example, an alicyclic diisocyanate such as isophorone diisocyanate, cyclohexyl diisocyanate, hydrogenated tolylene diisocyanate, hydrogenated xylene diisocyanate, hydrogenated diphenylmethane diisocyanate and hydrogenated tetramethylxylene diisocyanate.

The aromatic polyisocyanate includes, for example, an aromatic diisocyanate such as 2,4-tolylene diisocyanate, 2,6-tolylene diisocyanate, 4,4'-diphenylmethane diisocyanate, 2,4'-diphenylmethane diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate and 3,3'-dimethoxydiphenyl-4,4'-diisocyanate.

The aromatic/aliphatic polyisocyanate includes, for example, an aromatic/aliphatic diisocyanate such as xylylene-1,4-diisocyanate and xylylene-1,3-diisocyanate.

With regard to the polyisocyanate compound (C), it is also possible to use dimer, trimer, reaction product or polymer prepared from the above-exemplified aliphatic polyisocyanate, alicyclic polyisocyanate, aromatic polyisocyanate, aromatic/aliphatic polyisocyanate (such as dimer or trimer of diphenylmethane diisocyanate, reaction product of trimethylolpropane with tolylene diisocyanate, reaction product of trimethylolpropane with hexamethylene diisocyanate, polymethylene polyphenyl isocyanate, polyether polyisocyanate and polyester polyisocyanate).

Together with a polyisocyanate compound (C), it is also possible to use a cross-linking agent other than the polyisocyanate compound (such as polyfunctional melamine compound and polyfunctional epoxy compound) in the present invention.

A pressure-sensitive adhesive composition which forms a pressure-sensitive adhesive layer contains the carboxyl group-containing acrylic polymer (A), the polyhydroxyamine compound (B) and the polyisocyanate compound (C) and there is no particular limitation for the rate of each of the components contained therein. The rate of the polyhydroxyamine compound (B) contained therein to 100 parts by weight of the carboxyl group-containing acrylic polymer (A) may be selected from the range of 0.1 to 50 part(s) by weight (preferably, 1 to 30 part(s) by weight or, more preferably, 5 to 20 part(s) by weight). When the rate of the polyhydroxyamine compound (B) to 100 parts by weight of the carboxyl group-containing acrylic polymer (A) is less than 0.1 part by weight, time necessary for aging becomes long. On the other hand, when it is more than 50 parts by weight, there is a risk of lowering of cohesive force of the pressure-sensitive adhesive or pollution of the substance to be adhered.

Rate of the polyisocyanate compound (C) to 100 parts by weight of the carboxyl group-containing acrylic polymer (A) is able to be selected from the range of 5 to 50 parts by weight (preferably 8 to 40 parts by weight or, more preferably, 10 to 30 parts by weight). When the rate of the polyisocyanate compound (C) to 100 parts by weight of the carboxyl group-containing acrylic polymer (A) is less than 5 parts by weight, cohesive force of the pressure-sensitive adhesive lowers and adhesive force increases while, when it is more than 50 parts by weight, an adhesive force lowers.

Incidentally, with regard to the rate of the polyhydroxyamine compound (B) to the polyisocyanate compound (C), amount ($M_B$) (in mol) of hydroxyl group of the polyhydroxyamine compound (B) and amount ($M_C$) (in mol) of isocyanate group of the polyisocyanate compound (C), for example, may be in the following relationship. When they are in such a rate, it is possible to achieve a far better cohesive property.

$(M_C)/(M_B)$ = from 0.1 to 100 (preferably from 0.5 to 70 and, more preferably, from 1 to 50).

In addition to the above-mentioned components "carboxyl group-containing acrylic polymer (A), polyhydroxyamine compound (B) and isocyanate compound (C)", the pressure-sensitive adhesive composition forming a pressure-sensitive adhesive layer may further contain various additives such as tackifier [e.g., terpene resin (terpene resin, terpene phenol resin, aromatic modified terpene resin and hydrogenated terpene resin), petroleum resin (aliphatic, aromatic and alicyclic), rosin resin (e.g., rosin and hydrogenated rosin ester), coumarone-indene resin, phenol resin and styrene resin], various stabilizers (e.g., antioxidant, aging preventer and ultraviolet absorber), plasticizer, softener, coloring agent, antistatic agent, filler, surfactant and foaming agent.

Thickness of the pressure-sensitive adhesive layer may be freely set within such an extent that the above-mentioned characteristics of the present invention is achieved and it is, for example, about 1 to 100 μm (preferably 3 to 50 μm and, more preferably, 5 to 30 μm).

The pressure-sensitive adhesive layer is formed at least on one side of the substrate. The pressure-sensitive adhesive layer is able to be formed by utilizing known methods for forming the above-mentioned pressure-sensitive adhesive composition on the substrate. To be more specific, a pressure-sensitive adhesive composition is applied on a predetermined side of the substrate and then dried and/or hardened whereupon a pressure-sensitive adhesive layer is able to be formed.

The pressure-sensitive adhesive layer may be formed on the substrate via another layer so far as that does not deteriorate the advantage of the present invention. The pressure-sensitive adhesive layer may be in any of forms of single layer and plural layers.

[Pressure-sensitive adhesive sheet for removal of solvent-containing substance]

The pressure-sensitive adhesive sheet for removal of a solvent-containing substance according to the present invention has a substrate having formed a pressure-sensitive adhesive sheet (which may sometimes be referred to as "pressure-sensitive adhesive layer for removal of a solvent-containing substance") on at least one side of the substrate and is formed by a pressure-sensitive adhesive composition containing a carboxyl group-containing acrylic polymer (A), a polyhydroxyamine compound (B) and a polyisocyanate compound (C). The pressure-sensitive adhesive sheet for removal of a solvent-containing substance may be either a pressure-sensitive adhesive sheet in a constitution where a pressure-sensitive adhesive layer is formed on one side of the substrate (a single-sided pressure-sensitive adhesive sheet on a substrate) or a pressure-sensitive adhesive sheet in a constitution where pressure-sensitive adhesive layers are formed on both sides of the substrate (double-sided pressure-sensitive adhesive sheets on a substrate). The pressure-sensitive adhesive layer may be protected by a release film (release liner).

When the pressure-sensitive adhesive sheet for removal of a solvent-containing substance is a single-sided pressure-sensitive adhesive sheet on a substrate, a pressure-sensitive adhesive sheet formed on one side of the substrate is a pressure-sensitive adhesive layer for removal of a solvent-containing substance. On the other hand, when the pressure-sensitive adhesive sheet for removal of a solvent-containing substance is double-sided pressure-sensitive adhesive sheets on a substrate, the pressure-sensitive adhesive layers formed on both sides of the substrate may be a pressure-sensitive adhesive layer for removal of a solvent-containing substance or the pressure-sensitive adhesive layer formed on one side of the substrate may be a pressure-sensitive adhesive layer for removal of a solvent-containing substance and the pressure-sensitive adhesive layer formed on another side of the substrate may be a pressure-sensitive adhesive layer which is not a pressure-sensitive adhesive layer for removal of a solvent-containing substance.

In the pressure-sensitive adhesive sheet for removal of a solvent-containing substance according to the present invention, its constitution is preferred to be that a pressure-sensitive adhesive layer for removal of a solvent-containing substance is formed on one side of the substrate.

The pressure-sensitive adhesive sheet for removal of a solvent-containing substance may also have other layers (such as intermediate layer and undercoated layer) within such an extent that the advantage of the present invention is not deteriorated. To be more specific, a layer such as undercoated layer or intermediate layer may be formed between a substrate and a pressure-sensitive adhesive layer for removal of a solvent-containing substance. When the pressure-sensitive adhesive sheet for removal of a solvent-containing substance has such a constitution that a pressure-sensitive adhesive layer for removal of a solvent-containing substance is formed on one side of the substrate, a back side treating layer may be formed on the back side (a side which is opposite to the side on which a pressure-sensitive adhesive layer for removal of a solvent-containing substance is formed) of the substrate. The back side treating layer as such may be formed by a known or common back side treating agent (such as a long-chain alkyl releasing agent by a long-chain alkyl acrylate polymer or by a long-chain alkyl modified polymer; a releasing agent of an alkyl pendant type; a releasing agent of a silicone type; and a releasing agent of a fluorine type).

In the present invention, the pressure-sensitive adhesive sheet for removal of a solvent-containing substance may be formed in a roll-shaped wound form or may be formed in a form where sheets are laminated. Thus, the pressure-sensitive adhesive sheet for removal of a solvent-containing substance of the present invention may be in a form of sheet, tape, etc. When the pressure-sensitive adhesive sheet for removal of a solvent-containing substance is in a roll-shaped wound form, it is possible, for example, that a pressure-sensitive adhesive layer of the pressure-sensitive adhesive sheet for removal of a solvent-containing substance, etc. is wound in a roll shape under such a state of being protected by a releasing treatment layer formed on back side of the substrate or a separator whereby a pressure-sensitive adhesive sheet for removal of a solvent-containing substance in a state of being wound in a roll shape is formed.

Depending upon the layer constitution, etc. thereof, the pressure-sensitive adhesive sheet for removal of a

solvent-containing substance may be manufactured in such a manner that, utilizing a known or common method such as a coating method, a pressure-sensitive adhesive sheet for removal of a solvent-containing substance is formed on at least one side of the substrate and, if necessary, undercoating layer or back side treating layer is formed on a predetermined side. Incidentally, application of a pressure-sensitive adhesive composition, etc. is able to be carried out using a commonly-used coater (such as gravure roll coater, reverse roll coater, kiss roll coater, dip roll coater, bar coater, knife coater and spray coater).

In the pressure-sensitive adhesive sheet for removal of a solvent-containing substance according to the present invention, the pressure-sensitive adhesive layer (pressure-sensitive adhesive layer for removal of a solvent-containing substance) is formed from a pressure-sensitive adhesive composition containing a carboxyl group-containing acrylic polymer (A), a polyhydroxyamine compound (B) and a polyisocyanate compound (C) and, therefore, there is a constitution that the carboxyl group-containing acrylic polymer (A) is subjected to a cross-linking treatment with the polyhydroxyamine compound (B) and the polyisocyanate compound (C) whereupon, although it has an weakly adhesive property, both cleaning property and solvent-absorbing amount are much more improved. In addition, reaction of hydroxyl group of the polyhydroxyamine compound (B) with isocyanate group of the polyisocyanate compound (C) takes place quickly and, therefore, an aging time which is necessary for achieving a cohesive force having a big influence on productivity is able to be greatly shortened. Thus, a sufficient cohesive force is able to be achieved even by an aging for short time and, in addition, excellent cleaning property and solvent-absorbing amount are able to be achieved. Moreover, when the sheet is adhered on a screen printing plate for removal of the paste which turns around the back of screen printing plate, the above paste is able to be surely adhered and removed whereby an excellent cleaning effect is able to be achieved.

There is no particular limitation for a solvent-containing substance which is an object of removal in the present invention and its examples are a semi-solid substance in a wet state by containing a solvent such as paste, ink, starch, adhesive and paint. To be more specific, examples of a solvent-containing substance are paste (ink) which is used for a screen printing and ink which is adhered to roll, etc. or a printer such as offset printer.

When the pressure-sensitive adhesive sheet for removal of a solvent-containing substance is adhered, for example, to the back side of a screen plate or to the roll, etc., it absorbs a solvent which is contained in paste turning around the back side of a screen plate or in ink adhered to the roll, etc. whereby the paste or the like is able to be solidified. Accordingly, the pressure-sensitive adhesive sheet for removal of a solvent-containing substance according to the present invention is suitable, for example, for removal of paste (ink) which is turned around the back side of a screen printing plate, ink which is adhered to the roll, etc. of a printer such as an offset printer, staining by ink around a jet orifice for the ink of an ink jet printer, etc.

Examples of the solvent contained in the above-mentioned solvent-containing substance such as paste and ink are aliphatic hydrocarbon such as hexane, heptane and mineral spirit; alicyclic hydrocarbon such as cyclohexane; aromatic hydrocarbon such as toluene, xylene, solvent naphtha, tetralin and dipentene; alcohol such as methyl alcohol, ethyl alcohol, isopropyl alcohol, butyl alcohol, isobutyl alcohol, sec-butyl alcohol, cyclohexyl alcohol, 2-methylcyclohexyl alcohol and tridecyl alcohol; ester such as methyl acetate, ethyl acetate, isopropyl acetate and butyl acetate; ketone such as acetone, methyl ethyl ketone, methyl isobutyl ketone, cyclohexanone, methylcyclohexanone, diacetone alcohol and isophorone; glycol such as ethylene glycol, propylene glycol, diethylene glycol, trimethylene glycol and dipropylene glycol; glycol ether such as butyl cellosolve, propylene glycol monomethyl ether, propylene glycol monoethyl ether, propylene glycol monobutyl ether and diethylene glycol monobutyl ether; glycol ether ester such as butyl cellosolve acetate, propylene glycol monomethyl ether acetate, propylene glycol monoethyl ether acetate and diethylene glycol monobutyl ether acetate; and water. In the case of ink for screen printing, medium-boiling solvents (boiling point: about 120 to 230°C) and high-boiling solvents (boiling point: about 230 to 320°C) are often used and examples thereof are diethylene glycol monobutyl ether acetate, diethylene glycol monobutyl ether, etc. (such as diethylene glycol monobutyl ether acetate/diethylene glycol monobutyl ether [9/1 (ratio by weight)].

According to the pressure-sensitive adhesive sheet for removal of a solvent-containing substance of the present invention, its cleaning property and solvent-absorbing amount are much more improved because of the above-mentioned constitution. To be more specific, in the sheet for removal of a solvent-containing substance of the present invention, it is now possible to absorb more solvent as compared with the conventional sheet for removal of a solvent-containing substance and, in addition, adhesive force after absorption of solvent is able to be maintained in a high level. A cleaning property to a solvent-containing substance which contains much solvent is particularly improved. Moreover, a sufficient cohesive force is able to be achieved even by aging for short time and productivity of a pressure-sensitive adhesive sheet for removal of a solvent-containing product is able to be improved. Further, the paste turning around the back of a screen print plate is able to be surely adhered and removed whereupon an excellent cleaning effect is able to be achieved.

Therefore, when the pressure-sensitive adhesive sheet for removal of a solvent-containing substance of the present invention is used, poor printing due to blur can be reduced in the case of a screen printing while, in the case of offset printing, gravure printing and flexographic printing, cleaning time for each of rolls can be shortened whereby

productivity of the printing as such is able to be improved.

The present invention will now be illustrated in more detail by way of the following Examples although the present invention is not limited by those Examples. Incidentally, the terms "part(s)" and "%" used hereinafter mean "part(s) by weight" and "% by weight", respectively.

EXAMPLE 1

To 100 parts (as a solid) of a solution of a carboxyl group-containing acrylic copolymer [a copolymer of butyl acrylate/acrylonitrile/acrylic acid = 85:15:2.5 (ratio by weight)] were added 10 parts of EDP-1100 [(trade name; manufactured by Asahi Denka Co., Ltd.) (polyoxypropylene condensate of ethylenediamine as an amine compound containing plural hydroxyl groups)] and 15 parts of Coronate L [(trade name; manufactured by Nippon Polyurethane Industry Co., Ltd.) (a polyisocyanate compound)] followed by well mixing to give a pressure-sensitive adhesive composition. The pressure-sensitive adhesive composition prepared as such was applied on one side of a polyethylene film (substrate) having a thickness of 0.06 mm so as to make the thickness after drying 10 μm and then dried or hardened at the temperature of 90°C for 3 minutes to give a pressure-sensitive adhesive sheet.

EXAMPLE 2

The same operation as in Example 1 was conducted except that the adding amount of "EDP-1100" (trade name) as an amine compound containing plural hydroxyl groups was made 24 parts and the adding amount of "Coronate L" (trade name) as a polyisocyanate compound was made 20 parts whereupon a pressure-sensitive adhesive sheet was prepared.

EXAMPLE 3

The same operation as in Example 1 was conducted except that the adding amount of "EDP-1100" (trade name) as an amine compound containing plural hydroxyl groups was made 18 parts whereupon a pressure-sensitive adhesive sheet was prepared.

EXAMPLE 4

The same operation as in Example 1 was conducted except that a polypropylene film having a thickness of 0.04 mm was used as a substrate whereupon a pressure-sensitive adhesive sheet was prepared.

COMPARATIVE EXAMPLE 1

The same operation as in Example 1 was conducted except that "EDP-1100" (trade name) as an amine compound containing plural hydroxyl groups was not added and that the adding amount of "Coronate L" (trade name) as a polyisocyanate compound was made 20 parts whereupon a pressure-sensitive adhesive sheet was prepared.

COMPARATIVE EXAMPLE 2

To 100 parts (as a solid) of a solution of a carboxyl group-containing acrylic copolymer [a copolymer of butyl acrylate/acrylonitrile/acrylic acid = 85:15:2.5 (ratio by weight)] were added 20 parts of PTMG 1000 [(trade name; manufactured by Mitsubishi Chemical Corporation) (a compound containing no nitrogen atom and containing plural hydroxyl groups)] and 20 parts of Coronate L [(trade name; manufactured by Nippon Polyurethane Industry Co., Ltd.) (a polyisocyanate compound)] followed by well mixing to give a pressure-sensitive adhesive composition. The pressure-sensitive adhesive composition prepared as such was applied on one side of a polyethylene film (substrate) having a thickness of 0.06 mm so as to make the thickness after drying 10 μm and then dried or hardened at the temperature of 90°C for 3 minutes to give a pressure-sensitive adhesive sheet.

(Evaluation)

For each of the pressure-sensitive adhesive sheets prepared in Examples and Comparative Examples, adhesive force, gel fraction, absorbed amount of solvent and adhesive force after absorption of solvent were measured by the following methods (method for measurement of adhesive force, method for measurement of gel fraction, method for measurement of absorbed amount of solvent and method for measurement of adhesive force after absorption of solvent) and evaluated. The result is shown in Table 1.

(Method for measurement of adhesive force)

After a pressure-sensitive adhesive sheet was allowed to stand under the following condition, it was allowed to stand for 24 hours in an atmosphere of a state where temperature was 23°C ± 2°C and relative humidity was 50% ± 5% as a treatment for a sample before the measurement. A pressure-sensitive adhesive sheet which was cut in a size of 20 mm x 150 mm was adhered with pressure to the following substance to be adhered using the following adhesion apparatus with pressure by means of reciprocation at 5 mm per second. After 20 minutes from being adhered with pressure, an adhesive force (N/20 mm) was measured using a tensile test machine when the pressure-sensitive adhesive sheet was peeled off from the substance to be adhered at a tensile rate of 300 mm/minute and a peeling angle of 180°.
Apparatus for adhesion with pressure: The apparatus for adhesion with pressure is operated either automatically or by hand and has such a structure that, when a test piece is adhered with pressure, weight of only roller is applied to the test piece (sample). The roller is coated with a rubber layer of thickness of about 6 mm and spring hardness (Hs) of about 80 ± 5 [width: about 45 mm; diameter (including a rubber layer): about 95 mm; mass: 2,000 ± 20 g].
Substance to be adhered: SUS 430 BA [It is cleaned by the following cleaning method. Cleaning method: Surface of the substance to be adhered is wiped with a cloth (gauze, tissue, bleached cloth or the like) dipped with toluene. After dried, it is well wiped till dried using a fresh cloth or the like. It is cleaned repeatedly for three times or more until it is found to be clean by naked eye.]
Measuring environment: Temperature is 23°C ± 2°C and relative humidity is 50% ± 5%.
Condition for allowing the pressure-sensitive adhesive sheet to stand: At 23°C for 48 hours; at 50°C for 48 hours.

(Method for measurement of gel fraction)

Firstly, a pressure-sensitive adhesive constituting a pressure-sensitive adhesive layer in each pressure-sensitive adhesive sheet is applied on a separator so as to make the thickness after drying 10 µm and dried or hardened at the temperature of 90°C for 3 minutes to prepare a pressure-sensitive adhesive layer. The pressure-sensitive adhesive layer formed on the separator as such was allowed to stand under the following condition.
Condition for being allowed to stand: at 23°C for 3 hours; at 23°C for 48 hours; at 50°C for 48 hours
After that, weight of a porous polytetrafluoroethylene membrane (catalog number "NTF-1122", manufactured by Nitto Denko Corporation) (about 10-cm square) and kite string (about 12 cm) are measured (Weight of the porous polytetrafluoroethylene membrane and the kite string is defined as "A".).
A pressure-sensitive adhesive layer (about 0.5 to 1 g) separated from the separator are packed with the above-mentioned polytetrafluoroethylene membrane and kite string to prepare a pack in which a pressure-sensitive adhesive layer is packed (which may be mentioned "pressure-sensitive adhesive layer-containing pack"). Weight of the pressure-sensitive adhesive layer-containing pack is measured and then weight (A) of the porous polytetrafluoroethylene membrane and the kite string is deducted from weight of the pressure-sensitive adhesive layer-containing pack to determine the weight of a sample (pressure-sensitive adhesive layer) (Weight of the sample is defined as "B".).
After that, the pressure-sensitive adhesive layer-containing pack is placed in a 50- to 300-mL glass bottle, ethyl acetate is added as a solvent thereto and the glass bottle is covered whereupon the pressure-sensitive adhesive layer-containing pack is dipped in ethyl acetate for seven days at a room temperature. After dipping, the pressure-sensitive adhesive layer-containing pack is taken out and the solvent adhered onto the porous polytetrafluoroethylene membrane is wiped off followed by drying at 130°C for 2 hours. After drying, weight of the pressure-sensitive adhesive layer-containing pack is measured (Weight of the pressure-sensitive adhesive layer-containing pack is defined as "C".).
Gel fraction of the pressure-sensitive adhesive layer is calculated by the following formula.

$$\text{Gel fraction (\%)} = [(C - A)/B] \times 100$$

(Method for measurement of absorbed amount of solvent)

A pressure-sensitive adhesive sheet which is cut into 30 to 50-mm square and weighed previously is allowed to stand under the following condition, dipped in diethylene glycol monobutyl ether acetate which is a solvent for a screen printing for 1 second and taken out, the solvent adhered onto the surface of the pressure-sensitive adhesive sheet is immediately wiped off with a waste cloth, the weight is measured again and an increasing rate in weight per unit area is calculated.
Condition for being allowed to stand: At 23°C for 48 hours; at 50°C for 48 hours.

(Method for measurement of adhesive force after absorption of solvent)

A pressure-sensitive adhesive sheet cut in a size of 20 mm x 100 mm is firstly allowed to stand under the following condition for being allowed to stand.
Condition for being allowed to stand: At 23°C for 48 hours; at 50°C for 48 hours.
After that, diethylene glycol monobutyl ether acetate as a solvent is applied onto the polyethylene terephthalate film using a wire bar at the rate of 5 $g/m^2$ and the pressure-sensitive adhesive sheet (20 mm × 100 mm) which is allowed to stand under the above-mentioned condition is adhered onto the above applied surface so that the solvent is absorbed at the rate of 5 $g/m^2$ with the pressure-sensitive adhesive layer of the above pressure-sensitive adhesive sheet. The pressure-sensitive adhesive sheet where the solvent is absorbed with the pressure-sensitive adhesive layer is adhered with pressure to SUS 430 BA which is a substance to be adhered using a 2-kg roller. After one minute from the adhesion with pressure, the pressure-sensitive adhesive sheet is peeled off from the substance to be adhered using a tensile test machine at a tensile speed of 300 mm/minute and a peeling angle of 180° and an adhesive force at that time (N/20 mm) is measured.
Incidentally, SUS 430 BA which is a substance to be adhered is cleaned by the following cleaning method. Cleaning method: Surface of the substance to be adhered is wiped with a cloth (gauze, tissue, bleached cloth or the like) dipped with toluene. After dried, it is well wiped till dried using a fresh cloth or the like. It is cleaned repeatedly for three times or more until it is found to be clean by naked eye.
Measuring environment upon measurement of the adhesive force is that temperature is 23°C ± 2°C and relative humidity is 50% ± 5%.

Table 1

| | Examples | | | | Comp. Ex. | |
|---|---|---|---|---|---|---|
| | 1 | 2 | 3 | 4 | 1 | 2 |
| Compounded Amount (Rate to 100 parts by weight of solids in carboxyl group-containing acrylic copolymer; part(s) by weight) | | | | | | |
| Trade Name "Coronate L" | 15 | 20 | 15 | 15 | 20 | 20 |
| Trade Name "EDP-1100" | 10 | 24 | 18 | 10 | 0 | |
| Trade Name "PTMG1000" | | | | | | 20 |
| Adhesive Force (N/20 mm) | | | | | | |
| Condition for being allowed to stand: at 23°C for 48 hrs | 2.2 | 2.4 | 2.0 | 2.4 | 0.9 | 2.7 |
| Condition for being allowed to stand: at 50°C for 48 hrs | 2.3 | 2.4 | 1.9 | 2.5 | 1.7 | 2.5 |
| Gel Fraction (% by weight) | | | | | | |
| Condition for being allowed to stand: at 23°C for 3 hours | 81.0 | 75.0 | 73.0 | 81.0 | 1.8 | 0 |
| Condition for being allowed to stand: at 23°C for 48 hrs | 82.0 | 76.0 | 73.0 | 82.0 | 68.0 | 34.0 |
| Condition for being allowed to stand: at 50°C for 48 hrs | 82.0 | 76.0 | 74.0 | 82.0 | 86.0 | 38.0 |
| Amount of Absorbed Solvent ($g/m^2$) | | | | | | |
| Condition for being allowed to stand: at 23°C for 48 hrs | 12.0 | 14.0 | 16.0 | 12.0 | 8.5 | 20.0 |
| Condition for being allowed to stand: at 50°C for 48 hrs | 10.0 | 13.0 | 15.0 | 11.0 | 8.5 | 21.0 |
| Adhesive Force after Absorption of Solvent (N/20 mm) | | | | | | |
| Condition for being allowed to stand: at 23°C for 48 hrs | 0.15 | 0.14 | 0.20 | 0.20 | 0.04 | 0.70 |
| Condition for being allowed to stand: at 50°C for 48 hrs | 0.16 | 0.15 | 0.18 | 0.21 | 0.07 | 0.60 |

It is noted from Table 1 that, in pressure-sensitive adhesive sheets according to Examples, adhesive forces are similar in both cases where the aging condition is at 23°C for 48 hours and where that is at 50°C for 48 hours. Adhesive force of the pressure-sensitive adhesive sheets according to the Examples is better than that of the pressure-sensitive adhesive sheet according to Comparative Example 1 and, moreover, adhesive force of the pressure-sensitive adhesive sheets according to the Examples (where aging condition is at 23°C for 48 hours) is higher than that of the pressure-sensitive adhesive sheet according to Comparative Example 1 (where aging condition is at 50°C for 48 hours).
In addition, in the pressure-sensitive adhesive sheets according to the Examples, all of gel fractions are similar under each of the aging conditions of at 23°C for 3 hours, at 23°C for 48 hours and at 50°C for 48 hours whereupon it is noted that the reaction almost finishes by the aging at 23°C for 3 hours. On the other hand, it has been confirmed that, in Comparative Example 2 where the compounds having no nitrogen atom but containing hydroxyl group in a molecule are used, the reaction does not finish by an aging at 23°C for 3 hours and that the aging time is long as compared with the Examples.
Further, in the pressure-sensitive adhesive sheets according to the Examples, absorbed amount of the solvent is better than that in the pressure-sensitive adhesive sheet according to Comparative Example 1 and, furthermore, absorbed amount of the solvent (where aging condition is at 23°C for 48 hours) of the pressure-sensitive adhesive sheets according to the Examples is higher than that (where aging condition is at 50°C for 48 hours or at 23°C for 48 hours) of the pressure-sensitive adhesive sheet according to Comparative Example 1.
Consequently, it has been confirmed that, in the pressure-sensitive adhesive sheets according to the Examples, cleaning property and absorbed amount of solvent are much more improved. It has been also confirmed that a sufficient cohesive force is able to be achieved even by an aging for short time. Especially with regard to the temperature for aging, it has been confirmed that similar properties as the case of at 50°C (such as adhesive force, cohesive force and absorbed amount of solvent) are able to be achieved even at room temperature. Therefore, it is now possible that, even by aging at room temperature for short time, a sufficient cohesive force is achieved and a pressure-sensitive adhesive sheet for removal of a solvent-containing substance is prepared with an excellent productivity.
While the invention has been described in detail and with reference to specific embodiments thereof, it will be apparent to one skilled in the art that various changes and modifications can be made therein without departing from the spirit and scope thereof.

## Claims

1. A pressure-sensitive adhesive sheet for removal of a solvent-containing substance comprising a substrate having formed a pressure-sensitive adhesive layer on at least one side of the substrate, wherein the pressure-sensitive adhesive layer is formed by a pressure-sensitive adhesive composition comprising (A) an acrylic polymer containing carboxyl group, (B) an amine compound containing plural hydroxyl groups and (C) a polyisocyanate compound.

2. The pressure-sensitive adhesive sheet for removal of a solvent-containing substance according to claim 1, wherein, in the pressure-sensitive adhesive composition forming the pressure-sensitive adhesive layer, rate of the amine compound (B) having plural hydroxyl groups and that of the polyisocyanate compound (C) to 100 parts by weight of the acrylic polymer containing carboxyl group (A) are 0.1 to 50 part(s) by weight and 5 to 50 parts by weight, respectively.

3. The pressure-sensitive adhesive sheet for removal of a solvent-containing substance according to claim 1 or 2, wherein the sheet is used for cleaning of a screen printing plate.